# EUROPEAN PATENT APPLICATION

(11) **EP 3 372 877 A1**
(43) Date of publication of application: **12.09.2018**
(21) Application number: 16859771.4
(22) Date of filing: 25.10.2016
(51) Int. Cl.: F16K 27/00, F16K 17/06

(54) **VALVE**

(30) Priority: 27.10.2015 JP 2015210484
(71) Applicant: KYB Corporation, Tokyo 105-6111 (JP)
(72) Inventor: OGAWA, Takayuki, Tokyo 105-6111 (JP); KOUGE, Takuya, Tokyo 105-6111 (JP)
(74) Representative: MFG Patentanwälte Meyer-Wildhagen Meggle-Freund Gerhard PartG mbB
(86) International application number: PCT/JP2016/081528
(87) International publication number: WO 2017/073541

(57) **Abstract**

A valve (V) as a solution to the problem in the present invention includes a housing (H) having a hollow portion (1), a first sleeve (2) and a second sleeve (3) inserted in series in the hollow portion (1), a first spool (4) housed in the first sleeve (2), a second spool (5) housed in the second sleeve (3), and a stopper (6) mounted in an opening end of the housing (H).

## Description

### Technical Field

The present invention relates to a valve.

### Background Art

As a valve of this type, as disclosed in JP 2001-074154 A, for example, there is a valve including, in a housing, a tubular valve seat body that functions as a relief valve, a valve member and a selector valve slidably inserted in the valve seat body, a spring that biases the valve member toward the valve seat body, and a proportional solenoid that provides thrust to the valve member and the selector valve.

The selector valve opens or closes a passage, and the proportional solenoid can switch the selector valve to an open state and to a close state. The thrust of the proportional solenoid is brought to act on the valve member through the selector valve, thereby to adjust a valve opening pressure for causing the valve member to leave the valve seat.

### Summary of the Invention

In this conventional valve, the valve seat body provided with a screw portion in an outer periphery is screwed in the housing, and a tip end of the valve seat body is brought in contact with a stepped portion provided in an inner periphery of the housing. A tightening torque needs to be provided to firmly fix the valve seat body to the housing. As described above, since the tightening torque is provided after the tip end of the valve seat body comes to contact with the stepped portion, a frictional force acts between the tip end of the valve seat body and the stepped portion, and the valve seat body is twisted around the periphery. Further, a large compressive load in the axial direction acts on a tip end side of the screw portion where the valve seat body is screwed to the housing, and a flange coming in contact with a housing end is provided on an outer periphery of the valve seat body. Therefore, a large tensile load is applied to a section from the flange of the valve seat body to the screw portion.

In addition to the torque acting on the valve seat body as described above, the tensile load and the compressive load in the axial direction act on the valve seat body in some locations, and an internal shape is distorted. Therefore, to secure smooth sliding of the valve member and the selector valve, a finishing process to shape a hole after assembling the valve seat body to the housing needs to be applied, and this process is complicated.

Further, to omit the finishing process, control of the tightening torque and advanced control of dimensions of the valve seat body and the housing are necessary, and thus the process is still complicated.

Therefore, the present invention has been made to solve the above-described problems, and an object of the present invention is to provide a valve that can be easily processed and can realize smooth operation.

Therefore, a valve of the present invention includes a housing having a hollow portion, a first sleeve and a second sleeve inserted in series in the hollow portion, a first spool housed in the first sleeve, a second spool housed in the second sleeve, and a stopper mounted in an opening end of the housing.

### Brief Description of Drawings

Fig. 1 is a sectional view of a valve according to an embodiment.
Fig. 2 is a circuit diagram of a damper to which a valve according to an embodiment is applied.

### Description of Embodiments

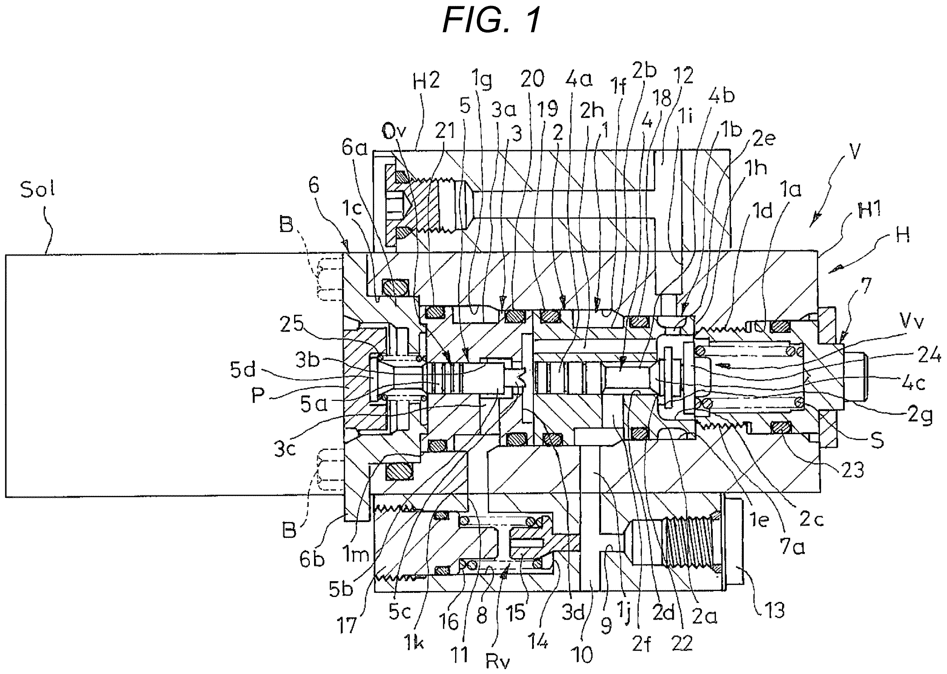

The present invention will be described on the basis of an illustrated embodiment. A valve V in an embodiment includes, as illustrated in Fig. 1, a housing H having a hollow portion 1, a first sleeve 2 and a second sleeve 3 inserted in series in the hollow portion 1, a first spool 4 housed in the first sleeve 2, a second spool 5 housed in the second sleeve 3, and a stopper 6 mounted in an opening end of the housing H.

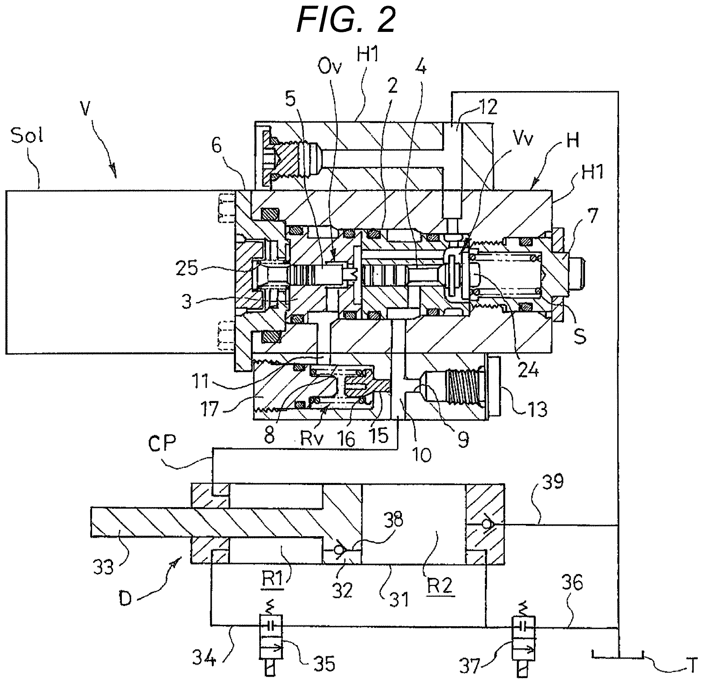

The valve V is applied to a damper D, for example, as illustrated in Fig. 2. To be specific, the valve V is provided in the middle of a damping passage CP through which a liquid flows with expansion and contraction of the damper D. The valve V provides resistance to the flow of the liquid that passes through the damping passage CP to cause the damper D to generate damping force.

Hereinafter, parts of the valve V will be described in detail. First, in this example, the housing H includes a tubular first housing H1, and a tubular second housing H2 mounted on an outer periphery of the first housing H1. The hollow portion 1 is provided in the first housing H1 and opens from an outside of the first housing H1. In this case, the hollow portion 1 communicates with the outside from both ends of the first housing H1 in an axial direction. In this example, the hollow portion 1 opens from both ends of the first housing H1. However, the hollow portion 1 may open from one end side to form a blind hole.

Further, the hollow portion 1 provided in the first housing H1 includes, in order from the right end side in Fig. 1, a spring bearing mounting portion 1a on which a spring bearing 7 is mounted, a sleeve housing portion 1b in which the first sleeve 2 and the second sleeve 3 are housed, and a stopper mounting portion 1c on which the stopper 6 is mounted.

The spring bearing mounting portion 1a is formed in a right end of the first housing H1 in Fig. 1, and a screw portion 1d is provided on the left side in Fig. 1. An inner diameter on a right side in Fig. 1 with respect to the screw portion 1d is made large. The spring bearing mounting portion 1a forms a part of the hollow portion 1.

The sleeve housing portion 1b is configured from a tip end portion 1e formed next to the screw portion 1d on the left in Fig. 1 and having a larger diameter than the screw portion 1d, an intermediate portion 1f formed next to the tip end portion 1e on the left in Fig. 1 and having a larger diameter than the tip end portion 1e, and a rear end portion 1g formed next to the intermediate portion 1f on the left in Fig. 1 and having a larger diameter than the intermediate portion 1f. The sleeve housing portion 1b forms a part of the hollow portion 1. Therefore, a stepped portion 1h is formed between a tip end of the sleeve housing portion 1b and a rear end of the spring bearing mounting portion 1a.

The stopper mounting portion 1c is formed in a left end of the first housing H1 in Fig. 1 and is formed next to the rear end portion 1g on the left in Fig. 1, having a larger inner diameter than the rear end portion 1g. The stopper mounting portion 1c forms a part of the hollow portion 1.

Further, in this example, the first housing H1 has a first port 1i opening in a radial direction from an outer peripheral side and communicating with the tip end portion 1e, a second port 1j opening in the radial direction from an outer peripheral side and communicating with the intermediate portion 1f, and a third port 1k opening in the radial direction from an outer peripheral side and communicating with the rear end portion 1g.

Further, the second housing H2 mounted on the outer periphery of the first housing H1 is tubular, and forms the housing H in cooperation with the first housing H1. The second housing H2 has a valve hole 8 as a hole opening in parallel to the hollow portion 1 from an outside at a left end in Fig. 1 and a passage 9 opening from an outer side at a right end in Fig. 1 and communicating with the valve hole 8. A plug 13 is screwed in and blocks the opening end at the right end in Fig. 1, of the passage 9 of the second housing H2. Further, the second housing H2 is provided with a fourth port 10 opening from an outer periphery to an inner periphery and communicating with the passage 9 in a middle thereof, a fifth port 11 opening from the inner periphery and communicating with the valve hole 8, and a sixth port 12 opening from the outer periphery to the inner periphery.

When the second housing H2 is mounted on the outer periphery of the first housing H1, the fourth port 10 and the second port 1j face and communicate with each other, and the fifth port 11 and the third port 1k face and communicate with each other, and the sixth port 12 and the first port 1i face and communicate with each other. Note that the first housing H1 and the second housing H2 may be one component instead of separate bodies.

The inner diameter of the valve hole 8 is larger than the inner diameter of an opening end of the passage 9, the opening end being connected to the valve hole 8. A relief valve member 15 is housed in the valve hole 8. The relief valve member 15 uses the opening end of the passage 9 to the valve hole 8 as a valve seat 14 and is seated on and leave the valve seat 14. A spring 16 that biases the relief valve member 15 toward the valve seat 14 side is housed in the valve hole 8 and a lid 17 that functions as a spring bearing is screwed to a left end side of the valve hole 8 and the valve hole 8 is blocked. The spring 16 is sandwiched in a compressed state between the lid 17 and the relief valve member 15. When a mount position of the lid 17 with respect to the valve hole 8 is adjusted, biasing force of the spring 16 that biases the relief valve member 15 can be adjusted. The valve seat 14, the relief valve member 15, the spring 16 and the lid 17 configure a passive relief valve Rv.

Therefore, when a liquid is introduced from the outside through the fourth port 10 and the pressure in the passage 9 exceeds a valve opening pressure of the relief valve Rv, the relief valve member 15 retreats from the valve seat 14 and opens to allow the passage 9 to communicate with the fifth port 11.

The first sleeve 2 has a tubular shape with a step. The outer diameter of the outer periphery of the first sleeve 2 on a tip end side that is a right end side in Fig. 1 is smaller than the outer diameter on a rear end side that is a left end side in Fig. 1. The first sleeve 2 has, in the outer periphery, two annular grooves 2a and 2b formed side by side in the axial direction.

Further, the first sleeve 2 has an inner periphery large diameter portion 2c provided on a tip end-side inner periphery, and an inner periphery small diameter portion 2d provided on a rear end-side inner periphery and having a smaller diameter than the inner periphery large diameter portion 2c. Further, the first sleeve 2 has a through hole 2e opening from the annular groove 2a and communicating with the inner periphery large diameter portion 2c, a through hole 2f opening from the annular groove 2b and communicating with the inner periphery small diameter portion 2d, and a through hole 2h opening from the rear end and opening to a stepped portion 2g formed between the inner periphery large diameter portion 2c and the inner periphery small diameter portion 2d.

A seal ring 18 is mounted to the outer periphery of the first sleeve 2 and between the annular grooves 2a and 2b along a peripheral direction, and a seal ring 19 is mounted to a rear end side with respect to the annular groove 2b along the peripheral direction.

The first sleeve 2 configured in this manner is inserted into the hollow portion 1 of the first housing H1 from a small-diameter side and is housed in the sleeve housing portion 1b in the hollow portion 1 in such a manner that a small-diameter portion is fit in the tip end portion 1e and a large-diameter portion is fit in the intermediate portion 1f in the first housing H1. Then, the seal rings 18 and 19 are brought in close contact with the inner periphery of the sleeve housing portion 1b of the first housing H1 to seal a space between the annular grooves 2a and 2b. Further, the annular groove 2a faces and communicates with the first port 1i provided in the first housing H1, and the annular groove 2b faces and communicated with the second port 1j provided in the first housing H1. Therefore, the fourth port 10 of the second housing H2 communicates with an inside of the first sleeve 2 through the second port 1j, the annular groove 2b, and the through hole 2f, and the sixth port 12 of the second housing H2 communicates with the first sleeve 2 through the first port 1i, the annular groove 2a, and through hole 2e.

The second sleeve 3 has a tubular shape with a step. The outer diameter on a tip end side that is a right end side in Fig. 1 is smaller than the outer diameter on a rear end side that is a left end side in Fig. 1. The second sleeve 3 has an annular groove 3a in an outer periphery and between a small-diameter portion and a large-diameter portion.

Further, the inner periphery of the second sleeve 3 is provided with an inner periphery large diameter portion 3b with a large inner peripheral diameter in the middle. Further, the second sleeve 3 has a through hole 3c opening from the annular groove 3a and communicating with the inner periphery large diameter portion 3b. Note that seal rings 20 and 21 are mounted to the outer periphery of the second sleeve 3 and at both sides of the annular groove 3a in the axial direction along the peripheral direction.

The second sleeve 3 configured in this manner is inserted into the hollow portion 1 of the first housing H1 from a small-diameter side and is housed in the sleeve housing portion 1b in the hollow portion 1 in such a manner that the small-diameter portion is fit in the intermediate portion 1f in the first housing H1 and the large-diameter portion is fit in the rear end portion 1g in the first housing H1. Then, the sealing rings 20 and 21 are brought in close contact with the inner periphery of the sleeve housing portion 1b of the first housing H1, and prevents the annular groove 3a from communicating with another place through the outer periphery of the second sleeve 3. Further, the annular groove 3a faces and communicates with the third port 1k provided in the first housing H1. Therefore, the fifth port 11 of the second housing H2 communicates with an inside of the second sleeve 3 through the annular groove 3a, the third port 1k, and the through hole 3c.

Further, a recessed portion 3d provided in a right end in Fig. 1 of the second sleeve 3 faces the through hole 2h opening to a rear end that is a left end in Fig. 1 of the first sleeve 2 and communicates with the inner periphery large diameter portion 2c in the first sleeve 2 through the through hole 2h.

The stopper 6 includes an annular portion 6a and a rectangular flange 6b provided on an outer periphery at a rear end that is a left end in Fig. 1 of the annular portion 6a. Then, the stopper 6 is fastened to the first housing H1 with a bolt B, which is inserted into the flange 6b, in a state where the annular portion 6a is fit in the stopper mounting portion 1c in the first housing H1 and the flange 6b is brought in contact with a left-end surface in Fig. 1 of the first housing H1.

Then, the stopper 6 is positioned in the axial direction as the flange 6b comes in contact with a rear end surface that is a left-end surface in Fig. 1 of the first housing H1, and is mounted in an opening end of the hollow portion 1 of the housing H. The inner diameter of the annular portion 6a of the stopper 6 is smaller than the outer diameter of the second sleeve 3 and is larger than the inner diameter of the second sleeve 3. An end surface at a right end in Fig. 1 of the annular portion 6a faces a rear end surface of the second sleeve 3. Therefore, when the stopper 6 is mounted to the housing H, the stopper 6 functions as a stopper for the first sleeve 2 and the second sleeve 3 housed in the hollow portion 1.

Further, the flange 6b blocks a part of an opening end at a left end in Fig. 1 of the valve hole 8 as a hole, thereby to prevent the lid 17 mounted in the valve hole 8 from falling off through the housing H. Therefore, there is no possibility that the relief valve Rv provided in the second housing H2 falls off through the housing H.

Further, in this example, in the state where the stopper 6 is positioned and mounted to the housing H in the axial direction, a total length in the axial direction of the first sleeve 2 and the second sleeve 3 is set to be shorter than the length in the axial direction from an end surface at a right end in Fig. 1 of the stopper 6 to the stepped portion 1h facing a tip end surface of the first sleeve 2 in the hollow portion 1. Therefore, even if the stopper 6 is mounted to the housing H, the first sleeve 2 and the second sleeve 3 are not sandwiched in a compressed state by the stopper 6 and the stepped portion 1h, and the first sleeve 2 and the second sleeve 3 do not receive axial force from the stopper 6. Note that the total length in the axial direction of the first sleeve 2 and the second sleeve 3 may be set to be equal to the length in the axial direction from the end surface at a right end in Fig. 1 of the stopper 6 to the stepped portion 1h facing the tip end surface of the first sleeve 2 in the hollow portion 1. Even in this case, the first sleeve 2 and the second sleeve 3 do not receive the axial force from the stopper 6.

Further, the stopper 6 may just be able to be positioned and mounted to the housing H in the axial direction. Therefore, for example, a screw groove may be provided in the annular portion 6a and the stopper mounting portion 1c, and the annular portion 6a and the stopper mounting portion 1c may be screwed and fastened. Further, in this example, since a stepped portion 1m is provided between the stopper mounting portion 1c and the sleeve housing portion 1b, the right end in Fig. 1 of the annular portion 6a may be brought in contact with the stepped portion 1m and the stopper 6 may be positioned in the axial direction with respect to the housing H. In this case, the flange 6b may be abandoned. When the screw groove is formed in the stopper mounting portion 1c and the stopper 6 is screwed and fastened to the housing H, the nominal diameter is increased, and thus the dimension of the housing H in the radial direction may be increased. In contrast, when the flange 6b is provided and the stopper 6 is fastened to the housing H with a bolt, the increase in the dimension of the housing H in the radial direction can be avoided.

The first spool 4 is housed in the first sleeve 2 in a movable manner in the axial direction, and the movement is guided in the first sleeve 2. To be specific, the first spool 4 includes a sliding shaft portion 4a slidably inserted into the inner periphery small diameter portion 2d of the first sleeve 2, a small diameter shaft portion 4b extending rightward from a right end in Fig. 1 of the sliding shaft portion 4a, and a truncated conical valve member 4c provided at a right end in Fig. 1 of the small diameter shaft portion 4b.

The sliding shaft portion 4a has a larger outer diameter than the small diameter shaft portion 4b and is in sliding contact with the inner periphery small diameter portion 2d of the first sleeve 2, so that the movement of the first spool 4 in the axial direction can be guided by the first sleeve 2 without axial deflection. The small diameter shaft portion 4b is smaller in the outer diameter than the inner periphery small diameter portion 2d in the inner diameter, and faces the through hole 2f formed in the first sleeve 2. In addition, the first spool 4 is moved in the axial direction with respect to the first sleeve 2, but the sliding shaft portion 4a does not completely block the opening of the through hole 2f.

The outer diameter of the valve member 4c is larger than the inner diameter of the inner periphery small diameter portion 2d. The valve member 4c uses a right-end opening edge in Fig. 1 of the inner periphery small diameter portion 2d as a valve seat 22 and can be seated on and leave the valve seat 22 by the movement of the first spool 4 in the axial direction.

In addition, a bottomed tubular spring bearing 7 is mounted to the spring bearing mounting portion 1a in the hollow portion 1 of the first housing H1. The spring bearing 7 has a bottomed tubular shape, and is provided with a screw portion 7a in an outer periphery and causes the screw portion 7a to be screwed into the screw portion 1d provided in the hollow portion 1 of the first housing H1, thereby to be mounted in the housing H. Further, the spring bearing 7 is provided with a seal ring 23 mounted on the outer periphery at a position avoiding the screw portion 7a along the peripheral direction. When the spring bearing 7 is mounted in the housing H as described above, the seal ring 23 is brought into close contact with the inner periphery of the spring bearing mounting portion 1a in the hollow portion 1, and the right end in Fig. 1 of the hollow portion 1 of the housing H is liquid tightly closed by the spring bearing 7.

A spring S is interposed between the spring bearing 7 and the right end in Fig. 1 of the valve member 4c of the first spool 4. The first spool 4 is biased in a direction into which the valve member 4c is seated on the valve seat 22 by biasing force of the spring S. A variable relief valve Vv is configured from the first spool 4 provided with the valve member 4c, the first sleeve 2 having the valve seat 22, and the spring S in this manner. Then, in a state where no external force acts on the first spool 4 other than the spring S, the valve member 4c is pressed against the valve seat 22 and is closed to maximize a valve opening pressure of the variable relief valve Vv, and provides thrust to press the first spool 4 in an opposite direction against the biasing force of the spring S. Pressing force of the valve member 4c to the valve seat 22 is adjusted as the thrust is adjusted, and the valve opening pressure of the variable relief valve Vv can be adjusted.

When the variable relief valve Vv is opened, a damping force adjusting passage configured from the fourth port 10, the second port 1j, the annular groove 2b, the through hole 2f, an inside of the inner periphery large diameter portion 2c, the through hole 2e, the annular groove 2a, the first port 1i, and the sixth port 12 becomes a communicating state. On the other hand, when the valve member 4c is seated on the valve seat 22 and the variable relief valve Vv is closed, the connection between the through hole 2f and the inner periphery large diameter portion 2c is disconnected and the damping force adjusting passage becomes a cut-off state.

Note that a valve member-side spring bearing 24 is interposed between the spring S and the first spool 4. In this example, the spring S is a coil spring, and a right end in Fig. 1 of the valve member-side spring bearing 24 is loosely fit to an inner periphery of the spring S. The gap between the spring S and the axis of the first spool 4 can be absorbed by the valve member-side spring bearing 24. With the configuration, the biasing force of the spring S acts on the first spool 4 without deviation in the radial direction. Therefore, the valve opening pressure of the first spool 4 is stabilized without variation.

The second spool 5 is housed in the second sleeve 3 in a movable manner in the axial direction and the movement is guided to the second sleeve 3. A right end in Fig. 1 can come in contact with the left end in Fig. 1 of the first spool 4. To be specific, the second spool 5 includes a sliding shaft portion 5a slidably inserted into the second sleeve 3, a columnar valve portion 5b shape extending rightward from a right end in Fig. 1 of the sliding shaft portion 5a, and a projection portion 5c provided at a right end in Fig. 1 of the valve portion 5b and projecting in the axial direction.

The sliding shaft portion 5a is in sliding contact with the inner periphery of the second sleeve 3 except the inner periphery large diameter portion 3b, and the movement of the second spool 5 in the axial direction is guided by the second sleeve 3 without axial deflection.

The valve portion 5b is set to have a diameter such that the outer diameter is in sliding contact with the inner periphery of the second sleeve 3. When the valve portion 5b is arranged to the right of the inner periphery large diameter portion 3b, communication of a passage made of the through hole 3c formed in the second sleeve 3 and the inside of the second sleeve 3 is disconnected.

Further, a flange 5d is provided at a rear end that is a left end in Fig. 1 of the sliding shaft portion 5a, and a coil spring 25 is interposed between a right end in Fig. 1 of the flange 5d and a left end in Fig. 1 of the second sleeve 3. The second spool 5 is biased leftward in Fig. 1 by the coil spring 25. In a state where no external force acts on the second spool 5 other than the biasing force of the coil spring 25, the second spool 5 causes a passage made of the through hole 3c and the inside of the second sleeve 3 to communicate when the valve portion 5b is arranged in the inner periphery large diameter portion 3b, as illustrated in Fig. 1.

Further, a solenoid Sol is mounted on a left side in Fig. 1 of the stopper 6, and energization to the solenoid Sol provides thrust in a right direction in Fig. 1 to the second spool 5 with a plunger P of the solenoid Sol. Further, the thrust to be provided to the second spool 5 can be adjusted by adjustment of an energization amount of the solenoid Sol. This thrust gives force in a direction against the coil spring 25 to the second spool 5, and thus can move the second spool 5 to cause the valve portion 5b to enter the inner periphery large diameter portion 3b against the biasing force of the coil spring 25. Therefore, the second spool 5 can be moved in the axial direction to cause the passage to communicate or to be disconnected according to presence/absence of energization of the solenoid Sol. In this manner, the second sleeve 3 and the second spool 5 configure an on-off valve Ov that opens or closes the passage, and the on-off valve Ov serves as a solenoid valve that opens and closes the passage by energization to the solenoid Sol.

When the on-off valve Ov is opened, a bypass passage configured from the fourth port 10, the passage 9, the valve hole 8, the fifth port 11, the third port 1k, the annular groove 3a, the through hole 3c, the recessed portion 3d, the through hole 2h, the inner periphery large diameter portion 2c, the through hole 2e, the annular groove 2a, the first port 1i, and the sixth port 12 becomes a communicating state. When the bypass passage is in the communicating state, the relief valve Rv provided in the valve hole 8 is also in the openable state, and when the pressure introduced through the fourth port 10 reaches the valve opening pressure of the relief valve Rv, the relief valve Rv is opened to release the pressure through the bypass passage. Further, in a state where the on-off valve Ov is closed, the connection of the passage made of the through hole 3c and the second sleeve 3 is disconnected, and the bypass passage becomes a cut-off state.

Further, the thrust provided to the second spool 5 can be adjusted by the energization amount of the solenoid Sol. When the passage is closed by the second spool 5, and the second spool 5 is brought into contact with the first spool 4, the thrust of the solenoid Sol can also be transmitted to the first spool 4 through the second spool 5.

As described above, since the thrust of the solenoid Sol in the direction against the spring S can be brought to act on the first spool 4, the valve opening pressure of the variable relief valve Vv can be adjusted by adjustment of the thrust to act on the first spool 4 by adjustment of the energization amount to the solenoid Sol.

Next, the damper D to which the valve V configured as described above is applied includes, as illustrated in Fig. 2, a cylinder 31, a piston 32 movably inserted into the cylinder 31 and which divides an inside of the cylinder 31 into a rod-side room R1 and a piston-side room R2, a rod 33 inserted into the cylinder 31 and connected with the piston 32, a tank T, a first on-off valve 35 provided in the middle of a first passage 34 that allows the rod-side room R1 and the piston-side room R2 to communicate, a second on-off valve 37 provided in the middle of a second passage 36 that allows the piston-side room R2 and the tank T to communicate, the damping passage CP that allows the rod-side room R1 and the tank T to communicate, a rectification passage 38 that permits only a flow of a hydraulic oil flowing from the piston-side room R2 to the rod-side room R1, and a suction passage 39 that permits only a flow of the hydraulic oil flowing from the tank T to the piston-side room R2.

In addition, the valve V is provided in the middle of the damping passage CP. Specifically, the valve V is provided in the damping passage CP, having the fourth port 10 connected to the rod-side room R1 side and the sixth port 12 connected to the tank T side.

Then, when the damper D configured as described above contracts while causing the first passage 34 to be in a communicating state with the first on-off valve 35 and the second on-off valve 37 to be in a closed state, a liquid of a volume, which is pushed aside by the rod 33 that enters the cylinder 31, is pushed out from the cylinder 31 to the damping passage CP. Under this circumstance, when the solenoid Sol can be energized and the on-off valve Ov is closed to adjust the valve opening pressure of the variable relief valve Vv, the pressure in the cylinder 31 is controlled to the valve opening pressure of the variable relief valve Vv, and the damper D exhibits damping force that hinders contraction. The magnitude of the damping force that hinders the contraction of the damper D can be adjusted by adjustment of the valve opening pressure of the variable relief valve Vv.

Then, when the damper D expands while causing the first passage 34 to be in a communicating state with the first on-off valve 35 and the second on-off valve 37 to be in a closed state, a liquid of a volume that corresponds to the volume of the rod 33 that leaves the cylinder 31 is supplied from the tank T through the suction passage 39. In this case, since the pressure in the cylinder 31 is substantially equal to the tank pressure, the damper D exhibits an expansion operation with almost no resistance. Therefore, when the damper D opens the first on-off valve 35 and closes the second on-off valve 37, the damper D functions as a single-effect damper that exhibits the damping force only at the time of contracting operation.

Meanwhile, when the damper D expands while causing the first on-off valve 35 to be in a closed state and the second passage 36 to be in a communicating state with the second on-off valve 37, a liquid of a volume that corresponds to the volume of the rod 33 that leaves the cylinder 31 is pushed out from the rod-side room R1 to the damping passage CP. The liquid is supplied from the tank T to the enlarging piston-side room R2. Under this circumstance, when the solenoid Sol can be energized and the on-off valve Ov is closed to adjust the valve opening pressure of the variable relief valve Vv, the pressure in the rod-side room R1 is controlled to the valve opening pressure of the variable relief valve Vv, and the damper D exhibits damping force that hinders expansion. The magnitude of the damping force that hinders the expansion of the damper D can be adjusted by adjustment of the valve opening pressure of the variable relief valve Vv.

When the damper D contracts while causing the first on-off valve 35 to be in a closed state and the second passage 36 to be in a communicating state with the second on-off valve 37, a liquid of a volume that corresponds to the volume of the rod 33 that enters the cylinder 31 is discharged from the cylinder 31 to the tank T through the second passage 36. In this case, since the pressure in the cylinder 31 is substantially equal to the tank pressure, the damper D exhibits a contraction operation with almost no resistance. Therefore, when the damper D closes the first on-off valve 35 and opens the second on-off valve 37, the damper D functions as a single-effect damper that exhibits the damping force only at the time of expansion operation.

In the damper D configured as described above, when both the first on-off valve 35 and the second on-off valve 37 are closed, the rectification passage 38, the suction passage 39, and the damping passage CP allow the rod-side room R1, the piston-side room R2, and the tank T to communicate in a row. In this state, when the solenoid Sol can be energized, and when the damper D is expanded and contracted by external force, the pressure in the rod-side room R1 can be controlled by the variable relief valve Vv, and the damper D can exhibit the damping force according to the energization amount of the solenoid Sol. That is, in this case, the damping force of the damper D can be controlled. Further, when the energization of the solenoid Sol is not possible or the solenoid Sol is de-energized, the on-off valve Ov is opened and thus the bypass passage becomes effective. In this case, when the damper D is expanded and contracted by external force, the pressure in the rod-side room R1 is controlled to the valve opening pressure of the relief valve Rv, and the damper D exhibits the damping force according to the setting of the relief valve Rv. Therefore, in this case, the damper D functions as a passive damper.

As described above, the valve V can function as damping force generation reduction by application to the damper D. Although not illustrated, in a case where a pump that supplies a liquid to the rod-side room R1 is provided in addition to the configuration of the damper D and the valve V to configure an actuator, thrust of the actuator can be adjusted by adjustment of the valve opening pressure by the variable relief valve Vv.

Then, the valve V of the present invention includes the housing H having the hollow portion 1, the first sleeve 2 and the second sleeve 3 inserted in series in the hollow portion 1, the first spool 4 housed in the first sleeve 2, the second spool 5 housed in the second sleeve 3, and the stopper 6 mounted in the opening end of the housing H. When the valve V is configured in this manner, the stopper 6 is positioned in the axial direction by the housing H. Therefore, the first sleeve 2 and the second sleeve 3 housed in the hollow portion 1 can be prevented from falling off without being loaded with a tensile load and a compressive load in the axial direction. Further, the second sleeve 3 is not screwed to the housing H, and thus no torque needs to be applied to the first sleeve 2 and the second sleeve 3. Therefore, distortion is not caused in the inner peripheral shapes of the first sleeve 2 and the second sleeve 3, where the first spool 4 and the second spool 5 are housed. With the configuration, highly accurate control of the dimensions of the first sleeve 2, the second sleeve 3, the stopper 6, and the housing H is not necessary, and smooth movement of the first spool 4 and the second spool 5 in the axial direction is secured without applying processing to shape the inner peripheries of the first sleeve 2 and the second sleeve 3. As described above, the valve V according to the present invention can be easily processed and can realize smooth operation of the first spool 4 and the second spool 5.

In addition, in the valve V of this example, the total length in the axial direction of the first sleeve 2 and the second sleeve 3 is shorter than the length in the axial direction from the stepped portion 1h of the housing H to the end face of the stopper 6. Therefore, even if the stopper 6 is mounted to the housing H, the first sleeve 2 and the second sleeve 3 are not sandwiched in a compressed state by the stopper 6 and the stepped portion 1h, and a state where no axial force acts on the first sleeve 2 and the second sleeve 3 can be reliably realized. Further, dimension control of the first sleeve 2, the second sleeve 3, the stopper 6, and the housing H becomes easier.

Further, in the valve V of this example, the stopper 6 includes the flange 6b on the outer periphery and is positioned by bringing the flange 6b in contact with the end surface of the housing H and positioned. In this way, the stopper 6 is positioned by the housing H with a simple structure, and the load of the axial force to the first sleeve 2 and the second sleeve 3 is reliably prevented.

Further, in the valve V in this example, the flange 6b of the stopper 6 is fastened to the housing H with a bolt so that the stopper 6 is fixed to the housing H. Therefore, there is no need to rotate the stopper 6 when the stopper 6 is attached to the housing H, and thus even if the stopper 6 and the second sleeve 3 come into contact with each other, no torque needs to be applied to the first sleeve 2 and the second sleeve 3. Therefore, the distortion of the inner peripheral shapes of the first sleeve 2 and the second sleeve 3 due to the load of the torque can be reliably prevented.

Further, in the valve V of this example, the housing H has the hole (valve hole 8) opening in parallel to the hollow portion 1 from the outside and the lid 17 that blocks the opening end of the hole (valve hole 8), and falling off of the lid 17 is restricted by the flange 6b of the stopper 6. Therefore, falling off of the lid 17 through the housing H is prevented, and dropping of the content contained in the hole (the valve hole 8) and leakage of the liquid through the hole (the valve hole 8) are also prevented.

Further, in the valve V of this example, the second spool 5 and the second sleeve 3 configure the on-off valve Ov, the second spool 5 is moved in the axial direction with respect to the second sleeve 3 to open or close the passage, the first spool 4 includes the valve member 4c seatable on the valve seat 22 provided in the first sleeve 2 and forms the variable relief valve Vv together with the first sleeve 2 and the spring S, and the solenoid Sol that moves the second spool 5 in the axial direction to open or close the on-off valve Ov and provides the thrust to the first spool 4 through the second spool 5 is included. By configuring the valve V in this way, opening and closing of the on-off valve Ov and adjustment of the valve opening pressure of the variable relief valve Vv can be performed with one solenoid Sol.

Further, the on-off valve Ov is opened at the time of de-energization to the solenoid Sol and is closed at the time of energization to the solenoid Sol to adjust the valve opening pressure of the variable relief valve Vv, and the relief valve Rv or a diaphragm may be provided in series to the on-off valve Ov. In this case, if the valve V is applied to the damper D or an actuator, the damper D or the actuator can be expected to exhibit the damping force as a damper even during failure.

The favorable embodiments of the present invention have been described in detail. Alterations, modifications, and changes can be made without departing from the scope of the claims.

This application claims priority based on Japanese Patent Application No. 2015-210484 filed on October 27, 2015 with the Japanese Patent Office, the entire contents of this application being incorporated herein by reference.

## Claims

1. A valve comprising:
a housing having a hollow portion opening from an outside;
a tubular first sleeve and a tubular second sleeve inserted in series in the hollow portion;
a first spool housed in the first sleeve and to be movably guided in an axial direction in the first sleeve;
a second spool housed in the second sleeve and to be movably guided in the axial direction in the second sleeve; and
a stopper positioned and mounted in an opening end of the housing in the axial direction, and preventing the first sleeve and the second sleeve from falling off.

2. The valve according to claim 1, wherein
the housing has a stepped portion facing a tip end surface of the first sleeve, and
a total length in the axial direction of the first sleeve and the second sleeve is shorter than a length in the axial direction from the stepped portion of the housing to an end surface of the stopper, the end surface facing a rear end surface of the second sleeve.

3. The valve according to claim 1, wherein
the stopper includes a flange on an outer periphery and is positioned by bringing the flange in contact with an end surface of the housing.

4. The valve according to claim 3, wherein
the flange is fastened to the housing with a bolt, and the stopper is fixed to the housing.

5. The valve according to claim 3, wherein
the housing has a hole opening in parallel to the hollow portion from an outside, and a lid that blocks an opening end of the hole, and
the lid is restricted from falling off through the hole by the flange.

6. The valve according to claim 1, wherein
the second spool and the second sleeve configure an on-off valve, and the second spool is moved in the axial direction with respect to the second sleeve to open or close a passage,
the first spool includes a valve member seatable on a valve seat provided in the first sleeve, and forms a variable relief valve with a spring that is housed in the hollow portion and biases the valve member in a direction to be seated on the valve seat, and the first sleeve, and
a solenoid that moves the second spool in the axial direction to open or close the on-off valve, and provides thrust to the first spool through the second spool to adjust a valve opening pressure of the variable relief valve is included.
